# FASCICULE DE BREVET EUROPEEN

(11) **EP 2 130 089 B1**
(45) Date de publication et mention de la délivrance du brevet: **14.09.2011**
(21) Numéro de dépôt: 08718184.8
(22) Date de dépôt: 25.03.2008
(51) Int. Cl.: G02C 3/00, G02C 11/00

(54) **ENSEMBLE FORMANT UNE PAIRE DE LUNETTES NOTAMMENT POUR NOURRISSON OU TRES JEUNE ENFANT**
EINE BRILLE BILDENDE BAUGRUPPE INSBESONDERE FÜR EINEN SÄUGLING ODER EIN SEHR JUNGES KIND
ASSEMBLY FORMING A PAIR OF SPECTACLES ESPECIALLY FOR AN INFANT OR VERY YOUNG CHILD

(30) Priorité: 26.03.2007 FR 0702175
(43) Date de publication de la demande: 09.12.2009
(73) Titulaire: Zekri, Ahmed, 01100 Oyonnax (FR); Maitre, Olivier, 01580 Matafelon (FR)
(72) Inventeur: Zekri, Ahmed, 01100 Oyonnax (FR); Maitre, Olivier, 01580 Matafelon (FR)
(74) Mandataire: Jeannet, Olivier
(86) Numéro de dépôt international: PCT/EP2008/053498
(87) Numéro de publication internationale: WO 2008/125432

(56) Documents cités:
- EP-A1- 0 285 684
- FR-A- 1 426 581
- US-A- 4 944 039
- US-A- 4 955 394
- US-A- 5 853 005

## Description

La présente invention concerne un ensemble formant une paire de lunettes notamment pour nourrisson ou très jeune enfant.

Il est parfois très difficile de faire porter des lunettes, notamment des lunettes de soleil, optiques ou de confort, à un nourrisson ou à un très jeune enfant. Or, le port de lunettes de soleil peut être nécessaire, voire obligatoire, en cas de fort ensoleillement ou de nécessité de correction de la vue.

Il existe des paires de lunettes pour nourrisson comprenant des branches classiques. Ces lunettes ne tiennent pas particulièrement en position sur la tête du nourrisson, et, n'étant pas toujours bien acceptées par ce dernier, peuvent être facilement retirées par celui-ci, voir par exemple EP 0 285 684 ou FR 1 426 581.

Il existe également des paires de lunettes dont les branches sont remplacées par un bandeau élastique. Ces lunettes présentent substantiellement les mêmes inconvénients que ceux mentionnés ci-dessus.

Il n'existe pas à ce jour de paire de lunettes dont le port est facilement accepté par un nourrisson ou un très jeune enfant, et la présente invention a pour objectif de remédier à cet inconvénient. À cet effet, l'ensemble selon invention est tel que défini par la revendication 1 et par les revendications subsidiaires.

Ainsi, lorsque que la tétine est dans la bouche d'un utilisateur, notamment d'un nourrisson, les lunettes viennent se placer en regard des yeux de cet utilisateur. Ce nourrisson n'a pas la sensation d'avoir des lunettes sur sa tête, ce qui conduit à une acceptation bien plus grande du port de ces lunettes, et ce d'autant plus que l'enfant est tranquillisé par la présence de la tétine dans sa bouche.

Le terme "tétine" doit être compris dans une acception la plus large, incluant tout objet de nature à être sucé par un utilisateur tel qu'un nourrisson ou un très jeune enfant. Il peut notamment s'agir de sucettes ou autres sucreries en forme de tétine.

Ladite pièce de liaison peut former corps avec la paire de lunettes, constituant une extension de celle-ci, ou peut comprendre des moyens d'assemblage à une paire de lunettes existante.

De la même manière, la tétine peut former corps avec ladite pièce de liaison, ou la pièce de liaison peut comprendre des moyens d'assemblage à une tétine existante.

De préférence, ladite pièce de liaison comprend deux bras de liaison s'étendant depuis la zone inférieure de chaque lunette, laissant libre une zone de passage du nez du nourrisson ou très jeune enfant et se rejoignant au niveau d'une zone destinée à être située en regard de la bouche de ce nourrisson ou très jeune enfant.

Ladite pièce de liaison, ainsi conformée, peut avoir un appui étendu contre le visage d'un nourrisson ou très jeune enfant et peut donc avoir une stabilité renforcée par rapport à ce visage.

La pièce de liaison peut avoir une forme légèrement courbe, adaptée à la courbure du visage d'un nourrisson ou très jeune enfant. Elle forme ainsi une sorte de "masque" pour la partie inférieure du visage du nourrisson, qui augmente la stabilité de son appui par rapport à ce visage.

Lesdits moyens d'assemblage de la pièce de liaison à une tétine incluant un corps de tétine peuvent notamment comprendre un trou aménagé au travers de ladite pièce de liaison, conformé pour permettre à cette pièce de liaison d'être engagée étroitement sur le corps de la tétine.

Le montage de la pièce de liaison sur la tétine est ainsi réalisé uniquement par friction.

Ledit trou peut comprendre deux encoches disposées sur deux côtés opposés de ce trou, permettant l'engagement de ladite pièce de liaison sur un anneau que comprend généralement un corps de tétine.

Selon une autre possibilité, les moyens d'assemblage peuvent comprendre des pattes d'encliquetage recevant le corps de tétine entre elles.

Selon une autre possibilité encore, les moyens d'assemblage comprennent une ou plusieurs pièces d'adaptation comprenant d'une part des moyens d'assemblage amovible à ladite pièce de liaison et d'autre part des moyens d'assemblage adaptés à un type déterminé de corps de tétine.

Une même pièce de liaison peut ainsi être adaptée à différents types de corps de tétine, par l'utilisation d'une ou de plusieurs pièces d'adaptation correspondant à ces corps de tétine.

La paire de lunettes peut être dépourvue de branches ou peut comprendre des branches. Ces branches permettent d'augmenter la stabilité de cette paire de lunettes par rapport au visage de l'enfant.

L'invention sera bien comprise, et d'autres caractéristiques et avantages de celle-ci apparaîtront, en référence au dessin schématique annexé, représentant, à titre d'exemples non limitatifs, une forme de réalisation préférée de l'ensemble qu'elle concerne.

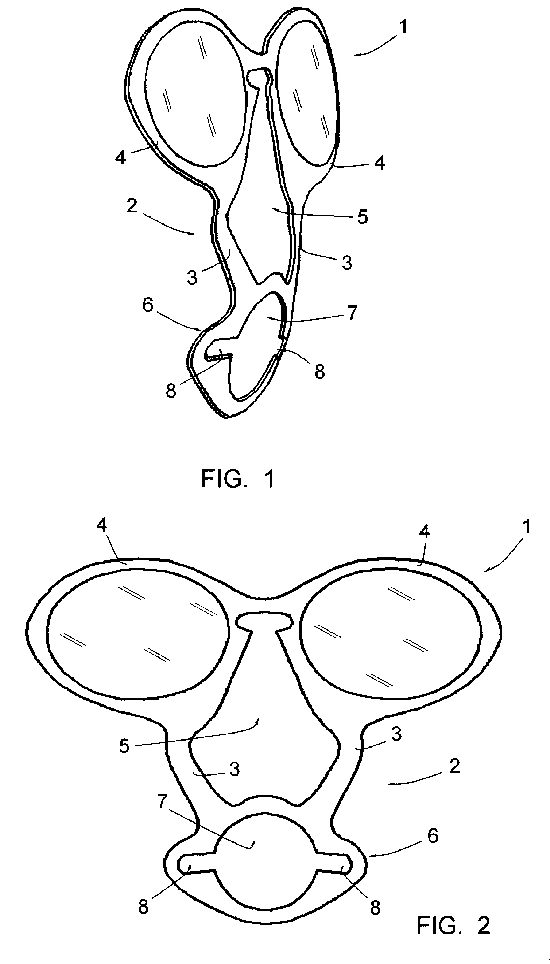

La figure 1 est une vue en perspective d'une paire de lunettes et d'une pièce de liaison de liaison que comprend cet ensemble ;
la figure 2 est une vue de face de cette paire de lunettes et de cette pièce de liaison ;
la figure 3 est une vue de côté, en coupe longitudinale, de cette paire de lunettes et de cette pièce de liaison, avant montage d'une sucette sur elles, et la figure 4 est une vue similaire figure 3, après montage de la sucette.
Les figures représentent une paire de lunettes 1 pour nourrisson ou très jeune enfant, comprenant une pièce de liaison 2 orientée dans une direction qui correspond au bas du visage du porteur des lunettes.

Cette pièce de liaison 2 forme corps avec la paire de lunettes 1, pouvant notamment être réalisée avec celle-ci, en une seule pièce de liaison de matière synthétique moulée.

La pièce de liaison 2 comprend deux bras de liaison 3 s'étendant depuis la zone inférieure de chaque lunette 4, laissant libre une zone 5 de passage du nez du nourrisson ou très jeune enfant et se rejoignant au niveau d'une zone 6 plus ou moins ovale. La pièce de liaison 2 a une forme légèrement courbe, tant longitudinalement que transversalement, adaptée à la courbure du visage d'un nourrisson ou très jeune enfant.

La zone 6 comprend un trou 7 aménagé au travers d'elle, et deux encoches 8 aménagées sur deux côtés opposés de ce trou 7.

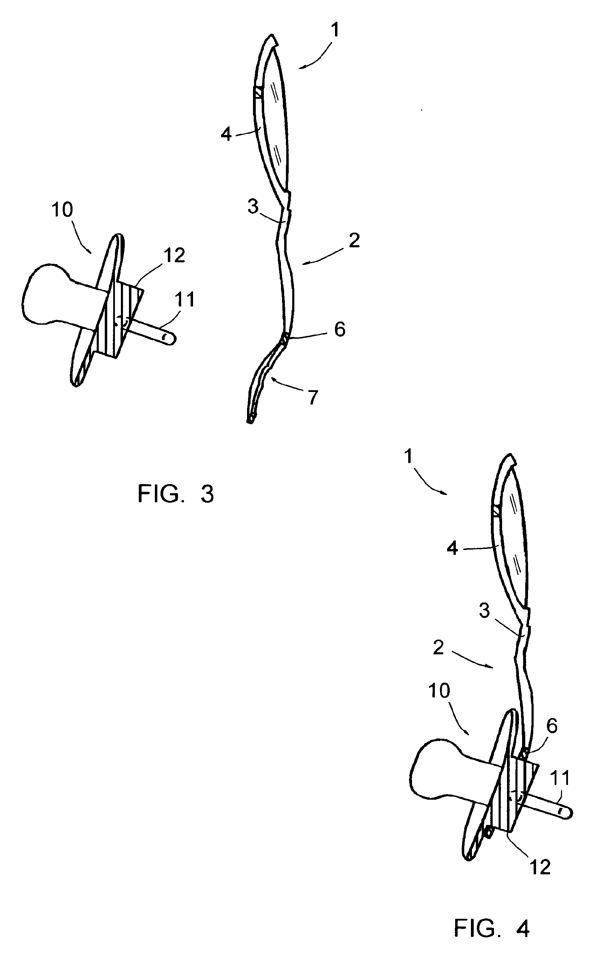

Ces encoches 8 sont dimensionnées pour permettre l'engagement au travers d'elles de l'anneau 11 d'une tétine 10, et le trou 7 est dimensionné pour permettre à la zone 6 d'être engagée étroitement sur le corps 12 de cette tétine, comme cela est visible sur la figure 4.

Ainsi que cela se comprend, ladite pièce de liaison 2 est dimensionnée, et le trou 7 est disposé sur cette pièce de liaison 2, de telle sorte que, lorsque la tétine 10 est placée dans la bouche d'un nourrisson ou d'un très jeune enfant, les lunettes 4 soient situées en regard des yeux de ce nourrisson ou de cet enfant.

Le nourrisson porte ainsi des lunettes sans avoir la sensation d'avoir ces lunettes sur sa tête, ce qui conduit à une acceptation bien plus grande du port des lunettes, et ce d'autant plus que l'enfant est tranquillisé par la présence de la tétine dans sa bouche.

La pièce de liaison 2 peut avoir un appui étendu contre le visage d'un nourrisson ou très jeune enfant et peut donc avoir une stabilité renforcée par rapport à ce visage.

Le trou 7 permet quant à lui le montage de la pièce de liaison 2 sur la tétine 10 uniquement par friction, de sorte que ce montage est facile à réaliser et que la tétine 10 peut être facilement séparée de la pièce de liaison 2 si nécessaire.

Comme cela apparaît de ce qui précède, l'invention fournit un ensemble formant une paire de lunettes dont le port est facilement accepté par un nourrisson ou un très jeune enfant, ce qui constitue un avantage déterminant par rapport au paires de lunettes homologues de la technique antérieure.

L'invention a été décrite ci-dessus en référence à une forme de réalisation donnée à titre de pur exemple. Il va de soi qu'elle n'est pas limitée à cette forme de réalisation mais qu'elle s'étend à toutes les formes de réalisation couvertes par les revendications ci-annexées. Ainsi, le terme "tétine" doit être compris dans une acception la plus large, incluant tout objet de nature à être sucé par un nourrisson ou un très jeune enfant ; il peut notamment s'agir de sucettes ou autres sucreries en forme de tétine ou de sucette ; la pièce de liaison 2 peut ne pas former corps avec la paire de lunettes 1 et comprendre des moyens d'assemblage à une paire de lunettes existante ; la tétine 10 peut former corps avec la pièce de liaison 2 ; la paire de lunettes 1 peut comprendre des branches.

## Revendications

1. - Ensemble comprenant une paire de lunettes notamment pour nourrisson ou très jeune enfant, et une pièce de liaison (2) reliée, ou pouvant être reliée à la paire de lunettes (1), **caracterisé en ce que** cette pièce de liaison forme corps avec une tétine (10) ou comprend des moyens d'assemblage (7) à une tétine (10) existante ; ladite pièce de liaison (2) est dimensionnée, et ladite tétine (10) est disposée, ou apte à être disposée, sur cette pièce de liaison (2), de telle sorte que, lorsque la pièce de liaison (2) est reliée à la paire de lunettes (1) et à la tétine (10) et que la tétine (10) est placée dans la bouche d'un utilisateur, la paire de lunettes (1) soit située en regard des yeux de cet utilisateur.

2. - Ensemble selon la revendication 1, **caractérisé en ce que** ladite pièce de liaison (2) forme corps avec la paire de lunettes (1), constituant une extension de celle-ci.

3. - Ensemble selon la revendication 1, **caractérisé en ce que** ladite pièce de liaison comprend des moyens d'assemblage à une paire de lunettes existante.

4. - Ensemble selon l'une des revendications 1 à 3, **caractérisé en ce que** ladite pièce de liaison (2) comprend deux bras de liaison (3) s'étendant depuis la zone inférieure de chaque lunette (4), laissant libre une zone (5) de passage du nez d'un utilisateur et se rejoignant au niveau d'une zone (6) destinée à être située en regard de la bouche de cet utilisateur.

5. - Ensemble selon l'une des revendications 1 à 4, **caractérisé en ce que** la pièce de liaison (2) a une forme légèrement courbe, adaptée à la courbure du visage d'un utilisateur.

6. - Ensemble selon l'une des revendications 1 à 5, **caractérisé en ce que**, dans le cas où la pièce de liaison (2) comprend des moyens d'assemblage (7) à une tétine (10) existante, lesdits moyens d'assemblage comprennent un trou (7) aménagé au travers de ladite pièce de liaison (2), conformé pour permettre à cette pièce de liaison (2) d'être engagée étroitement sur un corps (12) que comprend la tétine (10).

7. - Ensemble selon la revendication 6, **caractérisé en ce que** ledit trou (7) comprend deux encoches (8) disposées sur deux côtés opposés de ce trou, permettant l'engagement de ladite pièce de liaison (2) sur un anneau (11) que comprend généralement un corps (12) de tétine (10).

8. - Ensemble selon l'une des revendications 6 à 7, **caractérisé en ce que** les moyens d'assemblage comprennent des pattes d'encliquetage recevant le corps de tétine entre elles.

9. - Ensemble selon l'une des revendications 6 à 7, **caractérisé en ce que** les moyens d'assemblage comprennent une ou plusieurs pièces d'adaptation comprenant d'une part des moyens d'assemblage amovible à ladite pièce de liaison et d'autre part des moyens d'assemblage adaptés à un type déterminé de corps de tétine.

10. - Ensemble selon l'une des revendications 1 à 9, **caractérisé en ce que** la paire de lunettes (1) est dépourvue de branches.

11. - Ensemble selon l'une des revendications 1 à 9, **caractérisé en ce que** la paire de lunettes comprend des branches.

## Claims

1. - Assembly comprising a pair of spectacles (1) especially for an infant or very young child, and a connection piece (2) which is joined, or can be joined, to the pair of spectacles (1), **characterized in that** this connection piece (2) is integral with a pacifier (10) or comprises means (7) for assembly to an existing pacifier (10); said connection piece (2) is dimensioned, and said pacifier (10) is arranged, or can be arranged, on this connection piece (2), such that, when the connection piece (2) is joined to the pair of spectacles (1) and to the pacifier (10) and the pacifier (10) is placed in the mouth of a user, the pair of spectacles (1) is situated in line with the eyes of this user.

2. -Assembly according to claim 1, **characterized in that** said connection piece (2) is integral with the pair of spectacles (1), constituting an extension thereof.

3. - Assembly according to claim 1, **characterized in that** said connection piece (2) comprise means for assembly to an existing pair of spectacles.

4. - Assembly according to any of claims 1 to 3, **characterized in that** said connection piece (2) comprises two connection arms (3) extending from the lower zone of each spectacle (4), leaving a free zone (5) for passage of the infant or very young child's nose and coming together at a zone (6) designed to be situated in line with the mouth of this infant or very young child.

5. - Assembly according to any of claims 1 to 4, **characterized in that** the connection piece (2) has a slightly curved shape, adapted to the curvature of an infant or very young child's face.

6. - Assembly according to any of claims 1 to 5, **characterized in that**, in the event that the connection piece (2) comprises means (7) for assembly to an existing pacifier (10), said means for assembly of the connection piece to a pacifier comprise a hole (7) arranged through said connection piece (2), configured in order to allow this connection piece (2) to be engaged tightly on the body (12) of the pacifier (10).

7. - Assembly according to claim 6, **characterized in that** said hole (7) comprises two notches (8) arranged on two sides opposite this hole, allowing engagement of said connection piece (2) on a ring (11) generally comprised by a pacifier body (12).

8. - Assembly according to any of claims 6 to 7, **characterized in that** said assembly means comprise snap-in tabs receiving the pacifier body between them.

9. - Assembly according to any of claims 6 to 7, **characterized in that** the assembly means comprise one or several adaptation pieces comprising, on one hand, means for removable assembly to said connection piece, and on the other hand assembly means adapted to a determined type of pacifier body.

10. - Assembly according to any of claims 1 to 9, **characterized in that** the pair of spectacles (1) is provided without arms.

11. - Assembly according to any of claims 1 to 9, **characterized in that** the pair of spectacles (1) comprise arms.

## Patentansprüche

1. - Anordnung beinhaltend eine Brille (1) insbesondere für einen Säugling oder ein sehr junges Kind, und ein Verbindungsstück (2), die auf die Brille (1) verbunden ist oder verbunden sein kann, **dadurch gekennzeichnet, dass** das Verbindungsstück einstückig mit einem Schnuller (10) ausgebildet ist oder Mitteln (7) zum Zusammenbau mit einem vorhandenen Schnuller (10) aufweist; das Verbindungsstück (2) ist so dimensioniert, und der Schnuller (10) ist auf dem Verbindungsstück (2) hergestellt oder herstellen sein kann, so dass, wenn das Verbindungsstück (2) auf die Brille (1) und auf dem Schnuller (10) verbunden ist, und wenn der Schnuller (10) in dem Mund eines Benutzers angeordnet ist, befindet sich die Brille (1) gegenüber den Augen des Benutzers.

2. - Anordnung nach Anspruch 1, **dadurch gekennzeichnet, dass** das Verbindungsstück (2) mit der Brille (1) einstückig ausgebildet ist, bildend eine Ausdehnung davon.

3. - Anordnung nach Anspruch 1, **dadurch gekennzeichnet, dass** das Verbindungsstück Mitteln zum Zusammenbau mit einer vorhandenen Brille aufweist.

4. - Anordnung nach einem der Ansprüche 1 bis 3, **dadurch gekennzeichnet, dass** das Verbindungsstück (2) zwei Anschlussbeine (3) aufweist, die sich von den unteren Bereich jede Brille (4) prolongieren, so dass, sie eine Zone (5) für die Durchfahrt der Nase eines Benutzers freilassen und dass sie sich auf einer Zone (6) kombinieren, die gegenüber dem Mund des Nutzers zu befinden bestimmt ist.

5. - Anordnung nach einem der Ansprüche 1 bis 4, **dadurch gekennzeichnet, dass** das Verbindungsstück (2) eine leicht gebogene Form aufweist, die angepasst an die Krümmung des Gesichts eines Benutzers ist.

6. - Anordnung nach einem der Ansprüche 1 bis 5, **dadurch gekennzeichnet, dass**, wenn das Verbindungsstück (2) Mitteln (7) zum Zusammenbau mit einem vorhandenen Schnuller (10) aufweist, weisen diese Mitteln ein Loch (7) auf, das durch das Verbindungsstück (2) angeordnet ist und so geformt, dass das Verbindungsstück (2) auf einem Körper (12) dass der Schnuller (10) umfasst fest in Eingriff steht.

7. - Anordnung nach Anspruch 6, **dadurch gekennzeichnet, dass** das Loch (7) zwei Kerben (8) umfasst, die auf gegenüberliegenden Seiten des Loches angeordnet sind, erlaubend der Eingriff der Verbindungsstück (2) an einem Ring (11) dass, im Allgemeinen ein Schnullerkörper (10) umfasst.

8. - Anordnung nach einem der Ansprüche 6 bis 7, **dadurch gekennzeichnet, dass** die Zusammenbaumitteln Einrastlaschen umfassen, die den Schnullerkörper gegenseitig empfangen.

9. - Anordnung nach einem der Ansprüche 6 bis 7, **dadurch gekennzeichnet, dass** die Zusammenbaumitteln ein oder mehrere Adapterstücke umfassen, die einerseits Mitteln zum entfernbar Zusammenbau mit dem Verbindungsstück und andererseits Zusammenbaumitteln, die für eine bestimmte Art von Schnullerkörper angepasst sind, aufweisen.

10. - Anordnung nach einem der Ansprüche 1 bis 9, **dadurch gekennzeichnet, dass** die Brille (1) keinen Brillenbügel umfassen.

11. - Anordnung nach einem der Ansprüche 1 bis 9, **dadurch gekennzeichnet, dass** die Brille zwei Brillenbügeln umfassen.
